# EUROPEAN PATENT APPLICATION

(11) **EP 1 881 365 A2**
(43) Date of publication of application: **23.01.2008**
(21) Application number: 07013182.6
(22) Date of filing: 05.07.2007
(51) Int. Cl.: G02F 1/1362, G02F 1/1345, G09G 3/36

(54) **Display substrate and display device having the same**

(30) Priority: 21.07.2006 KR 20060068523
(71) Applicant: Samsung Electronics Co., Ltd., Yeongtong-gu Suwon-city, Gyeonggi-do 442-742 (KR)
(72) Inventor: Shin, Ae, Suwon-si Gyeonggi-do (KR); Jeon, Jin, Suwon-si Gyeonggi-do (KR)
(74) Representative: Schmidt, Sven Hendrik

(57) **Abstract**

A display substrate includes gate lines, driving circuit part, signal lines, connection lines and a contact part. Gate lines are formed on a display area and intersect data lines. Driving circuit part is formed on a peripheral area surrounding the display area and provides a gate signal to the gate lines. Signal lines are formed adjacent to the driving circuit part and provide a driving signal to the driving circuit part. Connection lines include a first end portion overlapped the signal lines and a second end portion electrically connected with the driving circuit part. A contact part is formed on the signal lines and connects the first end portion with the signal lines.

## Description

### CROSS-REFERENCE TO RELATED APPLICATION

The present application claims priority to Korean Patent Application No. 2006-068523, filed on July 21, 2006, the disclosure of which is incorporated herein by reference in its entirety.

### BACKGROUND OF THE INVENTION

### 1. Technical Field

The present disclosure relates to a display substrate and a display device having the display substrate, and more particularly, to a display substrate having an enhanced display quality.

### 2. Discussion of the Related Art

A liquid crystal display (LCD) device includes a liquid crystal display panel and a driving circuit part providing a driving signal to the liquid crystal display panel. The liquid crystal display panel includes a display area having a plurality of pixels to display an image and a peripheral area surrounding the display area. Each of the pixels includes a gate line and a data line.

A gate driving circuit is disposed in the peripheral area to provide a gate signal. Technology for integrating the gate driving circuit on the display panel is used to reduce the size of the display panel. The gate driving circuit includes a driving circuit part to generate a gate signal and lines to transmit a driving signal.

When the gate driving circuit is integrated in the peripheral area, a sealing member is formed on an area corresponding to the gate driving circuit to cover the gate driving circuit. The sealing member can protect the gate driving circuit.

Since a number of lines increase in response to various driving methods of the gate driving circuit, a margin of the sealing member to cover the gate driving circuit is decreased. Therefore, a reliability of the gate driving circuit may be deteriorated.

### SUMMARY OF THE INVENTION

Exemplary embodiments of the present invention provide a transflective liquid crystal display capable of increasing reflectivity, and a panel having the transflective liquid crystal display.

According to an exemplary embodiment of the present invention, a display substrate includes gate lines, driving circuit part, signal lines, connection lines and a contact part. Gate lines can be formed on a display area and may intersect data lines. Driving circuit part can be formed on a peripheral area surrounding the display area and provides a gate signal to the gate lines. Signal lines can be formed adjacent to the driving circuit part and provide a driving signal to the driving circuit part. Connection lines may include a first end portion overlapping the signal lines and a second end portion electrically connected with the driving circuit part. A contact part can be formed on the signal lines and may connect the first end portion with the signal lines.

According to an exemplary embodiment of the present invention, a display device includes a display substrate, a sealing member and a counter substrate. The display substrate may include a display area having gate lines and data lines intersecting the gate lines and a peripheral area having a gate driving circuit proving a gate signal to the gate lines. The gate driving circuit may include signal lines transmitting a driving signal, driving circuit part generating a gate signal by using the driving signal, connection lines having a first end portion overlapping the signal lines and a second end portion connected with the driving circuit part and a contact part connecting the first end portion with the signal lines. The sealing member can be formed on the peripheral area to cover the gate driving circuit. The counter substrate can be coupled with the display substrate by the sealing member. A liquid crystal layer can be interposed between the display substrate and the counter substrate.

According to an exemplary embodiment of the present invention, a gap between signal lines of the gate driving circuit can be reduced so that a sufficient margin of the sealing member can be obtained. Therefore, a reliability of the gate driving circuit can be enhanced by covering the gate driving circuit with the sealing member.

### BRIEF DESCRIPTION OF THE DRAWINGS

Exemplary embodiments of the present invention can be understood in more detail from the following descriptions taken in conjunction with the accompanying drawings, in which:
FIG. 1 is a plan view illustrating a display device in accordance with an exemplary embodiment of the present invention;
FIG. 2 is a block diagram showing a gate driving circuit shown in FIG. 1 according to an exemplary embodiment of the present invention;
FIG. 3 shows a layout of the gate driving circuit shown in FIG.1;
FIG. 4 is a cross-sectional view taken along the line I - I' shown in FIG. 3;
FIG. 5 shows a layout of a gate driving circuit in accordance with an exemplary embodiment of the present invention;
FIG. 6 is a block diagram showing a gate driving circuit in accordance with an exemplary embodiment of the present invention;
FIG. 7 shows a layout of the gate driving circuit shown in FIG.6;
FIG. 8 is a cross-sectional view taken along the line II-II' shown in FIG. 7; and
FIG. 9 shows a layout of a gate driving circuit in accordance with an exemplary embodiment of the present invention.

### DESCRIPTION OF EXEMPLARY EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein.

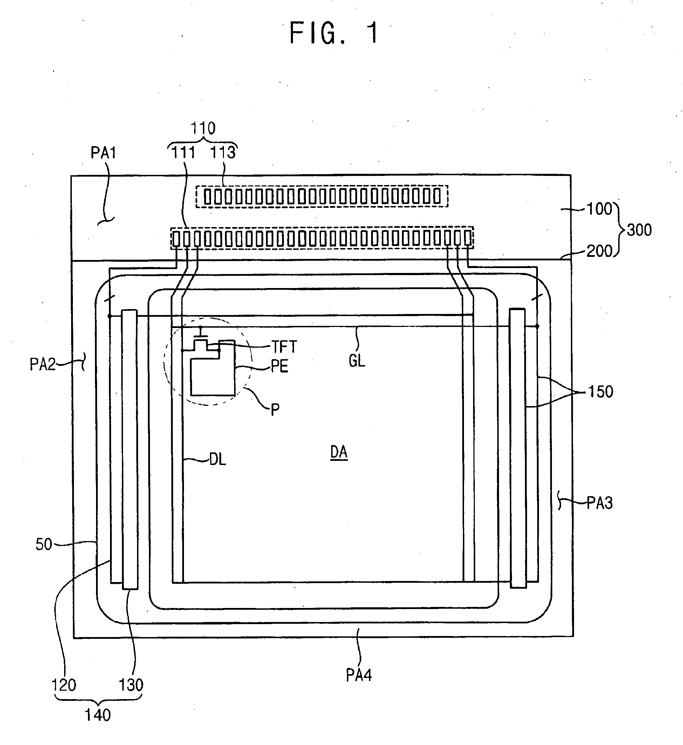

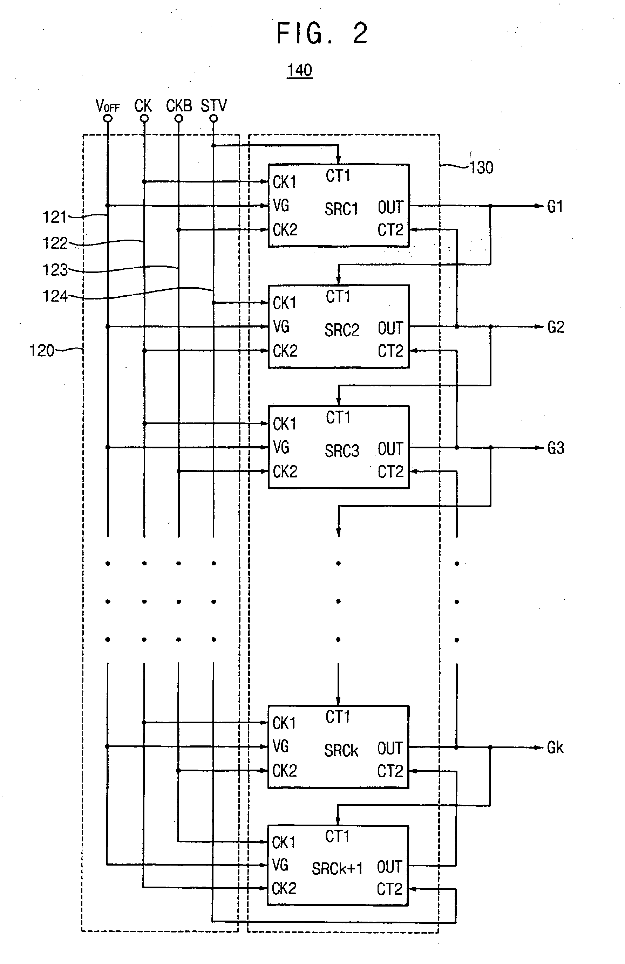

FIG. 1 is a plan view illustrating a display device in accordance with an exemplary embodiment of the present invention. FIG. 2 is a block diagram showing a gate driving circuit shown in FIG. 1.

Referring to FIG. 1 and FIG. 2, a display device includes a display panel 300. The display panel 300 includes a display substrate 100, a counter substrate 200, and a liquid crystal layer (not shown). The display panel 300 includes a display area (DA), a first peripheral area, a second peripheral area, a third peripheral area, and a fourth peripheral area (PA1, PA2, PA3, PA4). The peripheral areas surround the display area (DA).

The display substrate 100 includes a plurality of pixels in a matrix. Each of the pixels includes a thin film transistor (TFT) connected with a gate line (GA) and a data line (DA) and a pixel electrode (PE).

A sealing member 50 is formed in the first, second, third, and fourth peripheral areas (PA1, PA2, PA3, PA4). The sealing member 50 couples the display substrate 100 with the counter substrate 200.

A pad member 110 is formed on the first peripheral area (PA1) to transmit a driving signal to the display panel 300. The pad member 110 includes a plurality of first pads 111 to receive the driving signal from a flexible printed circuit substrate and a plurality of second pads 113 having a mounted driving chip for outputting a data signal to the data lines (DA) by using the diving signal.

A first gate driving circuit 140 is formed on the second peripheral area (PA2) to output a gate signal to odd-numbered gate lines of the gate lines (GL). The first gate driving circuit 140 is formed within an area where the sealing member 50 is formed. The first gate driving circuit 140 includes signal lines 120 to transmit the driving signal and a driving circuit part 130 to generate the gate signal.

A second gate driving circuit 150 is formed on the third peripheral area (PA3) to output a gate signal to even-numbered gate lines of the gate lines (GL). The second gate driving circuit 150 is formed within an area where the sealing member 50 is formed. The second gate driving circuit 150 includes signal lines (not shown) to receive a driving signal and a driving circuit part (not shown) to generate the gate signal. In an embodiment of the present invention, the gate driving circuit may be formed on the second peripheral area (PA2) or the third peripheral area (PA3).

In an embodiment, the first gate driving circuit 140 includes signal lines 120 and a driving circuit part 130. The signal lines 120 include a first signal line 121, a second signal line 122, a third signal line 123 and a fourth signal line 124. The first signal line 121 receives a gate off voltage (VOFF) and the second signal line 122 receives a first clock signal (CK). The third signal line 123 receives a second clock signal (CKB) and the fourth signal line 124 receives a vertical start voltage (STV).

The driving circuit part 130 includes a shift register having a plurality of stages (SRC1 ~ SRCk+1) connected to one another. The plurality of stages (SRC1 ~ SRCk+1) includes stages (SRC1 ~ SRCk) to supply a gate signal and a dummy stage (SRCk+1) to supply a dummy signal.

Each of the stages includes a power terminal (VG), a first clock terminal (CK1), a second clock terminal (CK2), a first control terminal (CT1), a second control terminal (CT2) and an output terminal (OUT). The power terminal (VG) is connected with the first signal line 121 and receives the gate off voltage (VOFF). The first clock terminal (CK1) is connected with the second signal line 122 and receives the first clock signal (CK). The second clock terminal (CK2) is connected with the third signal line 123 and receives the second clock signal (CKB).

In an embodiment, with respect to the odd-numbered stages (SRC2n-1), the first clock signal (CK) is supplied to the first clock terminal (CK1) and the second clock signal (CKB) is supplied to the second clock terminal (CK2). With respect to the even-numbered stages (SRC2n), the second clock signal (CKB) is supplied to the first clock terminal (CK1) and the first clock signal (CK) is supplied to the second clock terminal (CK2). Here, n is 1, 2, ..., k/2 wherein k is a multiple of 2. The first clock signal and the second clock signal (CK, CKB) have the same level as that of a gate on voltage (VON) with respect to a high level and the phases of the first and second clock signals are inverted.

The first control terminal (CT1) receives the vertical start signal (STV) or an output signal of a previous stage and controls a driving start time of the stage (SRC1). The second control terminal (CT2) receives an output signal of a next stage and controls a driving end time of the stage (SRC1). The output terminal (OUT) supplies a gate signal (G1) to a corresponding gate line.

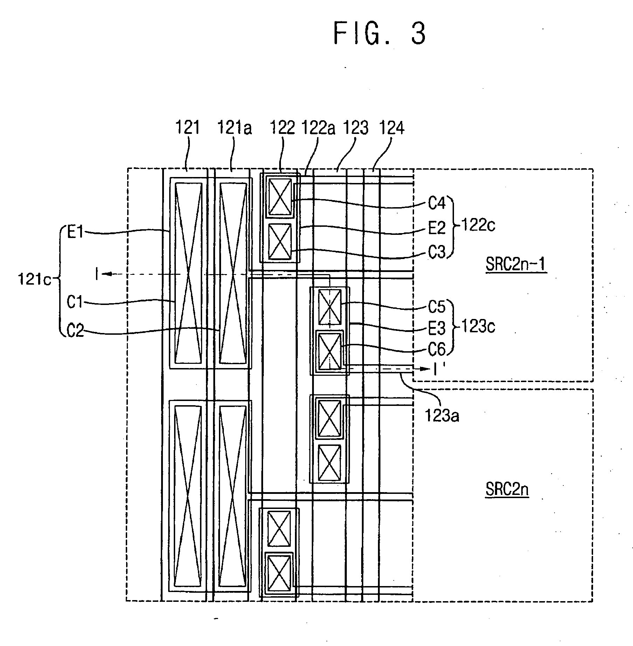

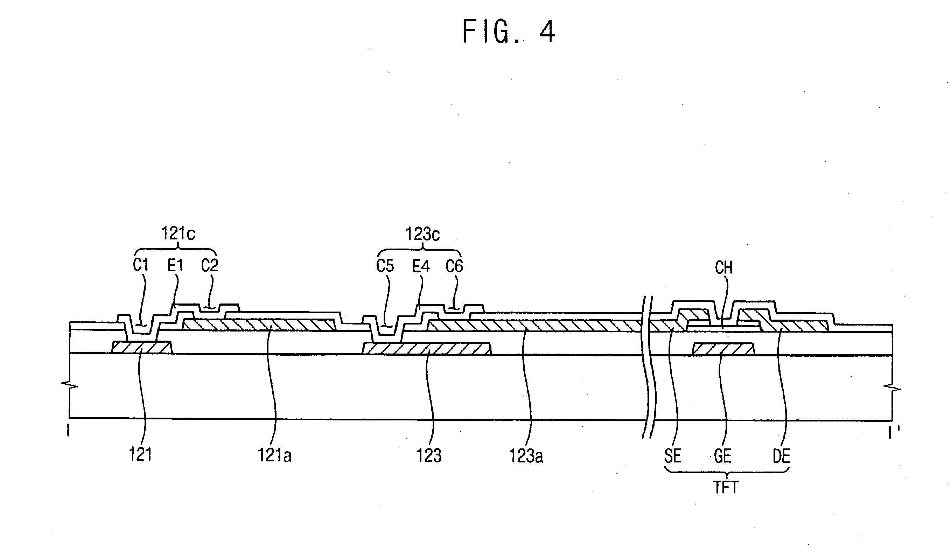

FIG. 3 shows a layout of the gate driving circuit shown in FIG.1. FIG. 4 is a cross-sectional view taken along the line I - I' shown in FIG. 3.

Referring to FIG. 2 to FIG. 4, a gate driving circuit includes signal lines 120, a driving circuit part 130 having a plurality of stages (SRC2n-1, SRC2n) and connection lines (not shown) electrically connecting the signal lines 120 and the driving circuit part 130.

Each of the stages (SRC2n-1) includes a plurality of thin film transistors (TFTs) connected to each other. The TFTs include a gate electrode (GE) comprising a first conductive layer, a source and a drain electrode (SE, DE) comprising a second conductive layer and a channel (CH) comprising, for example, an amorphous layer or polycrystalline layer.

The signal lines 120 extend in parallel with respect to the stages (SRC2n-1, SRC2n) and transmit driving signals to the stages (SRC2n-1, SRC2n). The signal lines 120 include the first signal line 121 transmitting the gate off voltage (VOFF), the second signal lines 122 transmitting the first clock signal (CK), the third signal line 123 transmitting the second clock signal (CKB) and the fourth clock signal 124 transmitting the vertical start voltage (STV). The signal lines 120 are formed in parallel with and at a predetermined distance from each other. The signal lines 120 comprise the first conductive layer.

The connection lines include a first connection line 121 a, a second connection line 122a and a third connection line 123a. The connection lines may comprise a second conductive layer insulated from the first conductive layer. Alternatively, when the signal lines 120 comprise the second conductive layer, the connection lines comprise the first conductive layer.

The first connection line 121 a comprises an extending portion extending in parallel with respect to the first signal line 121 and diverging portion diverging from each of the stages. The gate off voltage (VOFF) is applied to the first signal line 121 and a portion of the extending portion of the first connection line 121a to reduce a signal delay of the gate off voltage (VOFF). The gate off voltage (VOFF) is applied to each of the stages through the diverging portion of the first connection line 121a.

For example, the first connection line 121a is diverging toward the stage (SRC2n-1) and is connected with the power terminal (VG) of the stage (SRC2n-1). The first signal line 121 is connected with the first connection line 121a through a first contact part 121c.

The first contact part 121c includes a first contact hole (C1), a second contact hole (C2) and a first contact electrode (E1). The first contact hole (C1) exposes the first signal line 121, and the second contact hole (C2) exposes the first connection line 121a. The first contact electrode E1 connects the first signal line. 121 with the first connection line 121 a through the first and second contact holes (C1, C2).

A first end portion of the second connection line 122a overlaps the second signal line 122. A second end portion of the second connection line 122a is electrically connected with a first clock terminal (CK1) of the (2n-1)^{th} stage (SRC2n-1). The second signal line 122 is electrically connected with the second connection line 122a through the second contact part 122c.

The second contact part 122c includes a third contact hole (C3), a fourth contact hole (C4) and a second contact electrode (E2). The third contact hole (C3) exposes the second signal line 122 and the fourth contact hole (C4) exposes the first end portion of the second connection line 122a. The second contact electrode (E2) connects the second signal line 122 with the second connection line 122a through the third and fourth contact holes (C3, C4).

The first end portion of the third connection line 123a overlaps the third signal line 123. The second end portion of the third connection line 123a is electrically connected with the second clock terminal (CK2) of the (2n-1)^{th} stage (SRC2n-1). The third signal line 123 is connected with the third connection line 123a through the third contact part 123c.

The third contact part 123c includes a fifth contact hole (C5), a sixth contact hole (C6) and a third contact electrode (E3). The fifth contact hole (C5) exposes the third signal line 123, and the sixth contact hole (C6) exposes the first end portion of the third connection line 123a. The third contact electrode (E3) connects the third signal line 123 with the third connection line 123a through the fifth and sixth contact holes (C5, C6).

The first, second and third contact electrodes (E1, E2 and E3) comprise a third conductive layer. In an embodiment, the third conductive layer may comprise the same material as that of a pixel electrode that is formed in a pixel area and is insulated from the second conductive layer.

Since the second and third contact parts 122c, 123c overlap the second and third signal lines 122, 123, respectively, an additional contact area between the second and third signal lines 122, 123 is not required. Therefore, a width of gap between the second and third signal lines 122, 123 can be minimized.

Since an area for the signal lines 120 can be minimized, a total area for the gate driving circuit can be minimized. A corrosion of the gate driving circuit is prevented by securing a margin of the sealing member to cover the gate driving circuit.

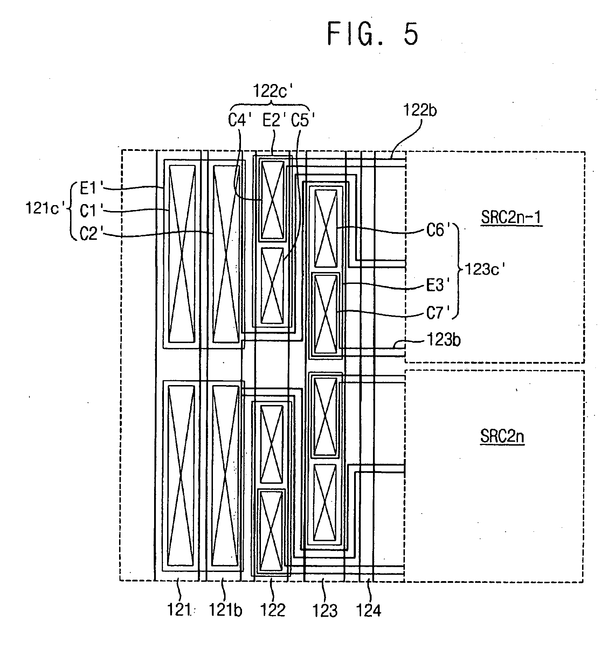

FIG. 5 shows a layout of a gate driving circuit in accordance with an exemplary embodiment of the present invention.

Referring to FIGS. 2 and 5, the signal lines 120 include the first signal line 121 transmitting the gate off voltage (VOFF), the second signal line 122 transmitting the first clock signal (CK), the third signal line 123 transmitting the second clock signal (CKB) and the fourth signal line 124 transmitting the vertical start voltage (STV).

The connection lines include a first connection line 121 b, a second connection line 122b and a third connection line 123b. The connection lines comprise a second conductive layer. The signal lines 120 and the connection lines may comprise different conductive layers from each other.

In an embodiment, the first connection line 121 b comprises an extending portion extending in parallel with respect to the first signal line 121 to receive a gate off voltage (VOFF) and a diverging portion diverging from the extending portion to electrically connect a power terminal (VG) of the (2n-1)^{th} stage (SRC2n-1).

The diverging portion of the first connection line 121 b may be bent in a zigzag shape to enlarge a contact area.

The first signal line 121 is electrically connected with the first connection line 121 b through the first contact part 121c'. The first contact part 121c' includes a first contact hole (C1'), a second contact hole (C2') and a first contact electrode (E1'). The first contact hole (C1') exposes the first signal line 121, and the second contact hole (C2') exposes the first connection line 121b. The first contact electrode (E1') electrically connects the first signal line 121 and the first connection line 121 b through the first and second contact holes (C1', C2').

A first end portion of the second connection line 122b overlaps the second signal line 122, and a second end portion of the second connection line 122b is electrically connected with a first clock terminal (CK1) of the (2n-1)^{th} stage (SRC2n-1). For example, the first end portion of the second connection line 122b may have an overlapping area broader than that of the first end portion of the second connection line 122a as shown in FIG. 3.

In an embodiment, since the first connection line 121b is formed in a zigzag shape, the second contact part 122c' can have a contact area broader than that of the second contact part 122c as shown in FIG. 3.

The second contact part 122c' includes a third contact hole (C3') to expose the second signal line 122 and a fourth contact hole (C4') to expose the first end portion of the second connection line 122b. The second contact part 122c' includes a second contact electrode (E2') that connects the second signal line 122 and the second connection line 122b through the third and fourth contact holes (C3', C4').

A first end portion of the third connection line 123a overlaps the third signal line 123, and a second end portion of the third connection line 123a is electrically connected with a second clock terminal (CK2) of the (2n-1)^{th} stage (SRC2n-1). For example, the first end portion of the third connection line 123b may have an overlapping area broader than that of the first end portion of the third connection line 123a as shown in FIG. 3.

In an embodiment, since the first connection line 122b is formed in a zigzag shape, the third contact part 123c' can have a contact area broader than that of the second contact part 123c as shown in FIG.3.

The third contact part 123c' includes a fifth contact hole (C5') to expose the third signal line 123 and a sixth contact hole (C6') to expose the first end portion of the third connection line 123b. The third contact part 123c' includes a third contact electrode (E3') that connects the third signal line 123 and the third connection line 123b through the fifth and sixth contact holes (C5', C6').

The first, second and third contact electrodes (E1', E2', E3') may comprise a third conductive layer. In an embodiment, the third conductive layer may comprise the same material as that of a pixel electrode that is formed in a pixel area.

Since the contact hole is formed on a corresponding signal line, a width of a gap between signal lines can be minimized, thereby minimizing an area for forming of the gate driving circuit.

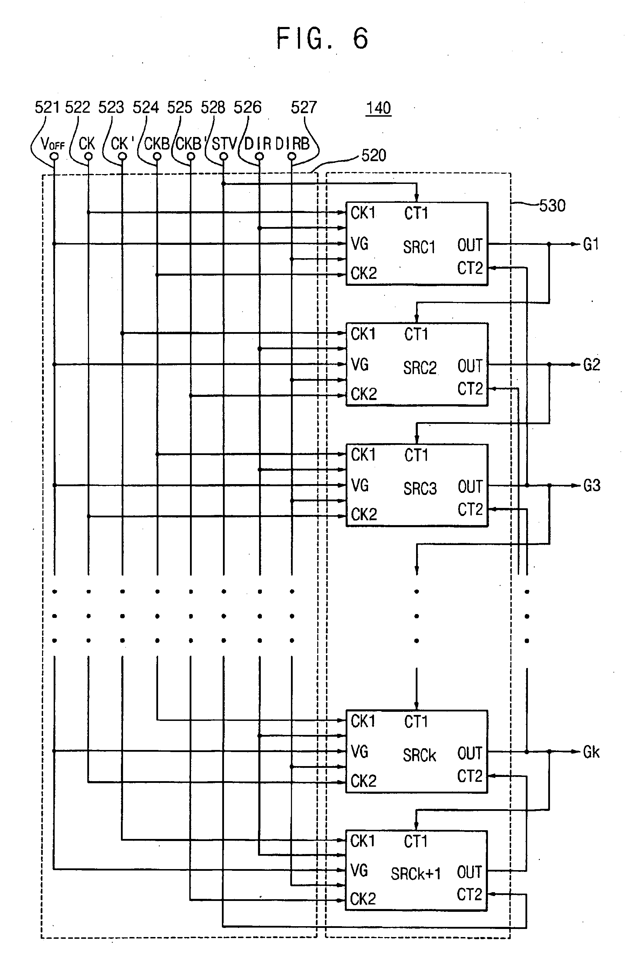

FIG. 6 is a block diagram for showing a gate driving circuit in accordance with an exemplary embodiment of the present invention.

Referring to FIG. 1 to FIG. 6, the gate driving circuit 140 includes signal lines 520 and a driving circuit 530.

The signal line 520 includes a first, a second, a third, a fourth, a fifth, a sixth, a seventh and an eighth signal lines 521, 522, 523, 524, 525, 526, 527, 528. The first signal line 521 transmits a gate off voltage (VOFF). The second signal line 522 transmits a first clock signal (CK). The third signal line 523 transmits a second clock signal (CK'). The fourth signal line 524 transmits a third clock signal (CKB). The fifth signal line 525 transmits a fourth clock signal (CKB'). The sixth signal line 526 transmits a forward signal (DIR). The seventh signal line 527 transmits a reverse signal (DIRB). The eighth signal line 528 transmits a vertical start voltage (STV).

The driving circuit part 530 includes a plurality of stages (SRC1 ∼ SRCk+1) connected to one another. The plurality of stages (SRC1 ∼ SRCk+1) supply a gate signal to odd-numbered gate lines of the plurality of gate lines (GL). Each stage (SRC1) includes the power terminal (VG), the first clock terminal (CK1), the second clock terminal (CK2), the first control terminal (CT1), the second control terminal (CT2) and the output terminal (OUT). The stages (SRC1 ∼ SRCk+1) include a first terminal to receive the forward signal (DIR) for sequentially driving the stages (SRC1 ∼ SRCk+1) forwardly and a second terminal to receive the reverse signal (DIRB) for sequentially driving the stages (SRC1 ∼ SRCk+1) in reverse.

In an embodiment, with respect to a 4n-3^{rd} stage (SRC1), the first clock signal (CK) is applied to the first clock terminal (CK1), and the third clock signal (CKB) is applied to the second clock terminal (CK2). With respect to a 4n-2^{nd} stage (SRC2), the second clock signal (CK') is applied to the first clock terminal (CK1), and the fourth clock signal (CKB') is applied to the second clock terminal (CK2). With respect to a (4n-1)^{th} stage (SRC3), the third clock signal (CKB) is applied to the first clock terminal (CK1), and the first clock signal (CK) is applied the second clock terminal (CK2). With respect to a 4n^{th} stage (SRC4), the fourth clock signal (CKB') is applied to the first clock terminal (CK1), and the second clock signal (CK') is applied to the second clock terminal (CK2). Here, n is 1, 2, ..., k/4, and k is a multiple of 4.

The first clock signal (CK) and the third clock signal (CK') have a constant delay time. The first clock signal and the third clock signal (CK, CKB) are inverted with respect to each other with respect to phase. The second clock signal and the fourth clock signal (CK', CKB') are inverted with respect to each other with respect to phase.

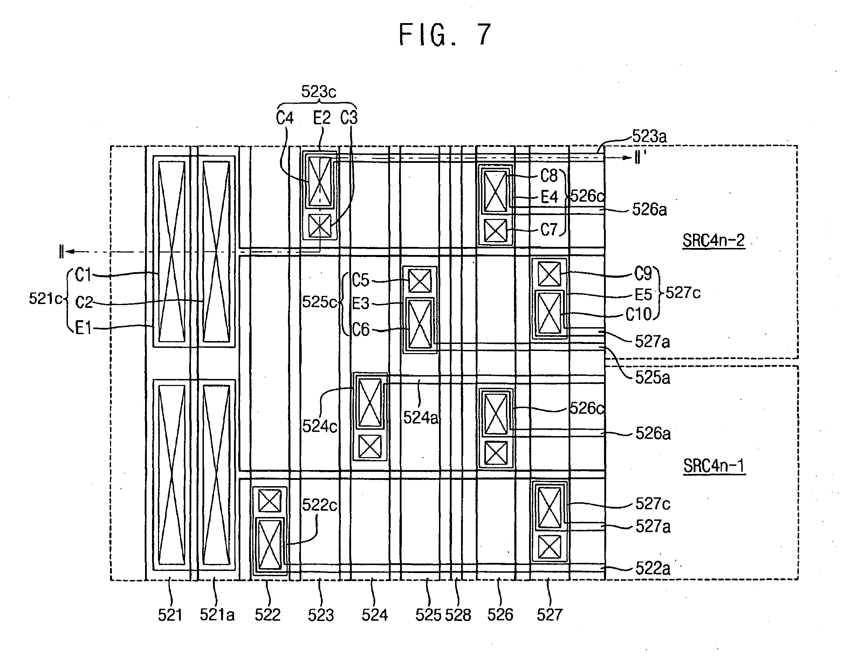

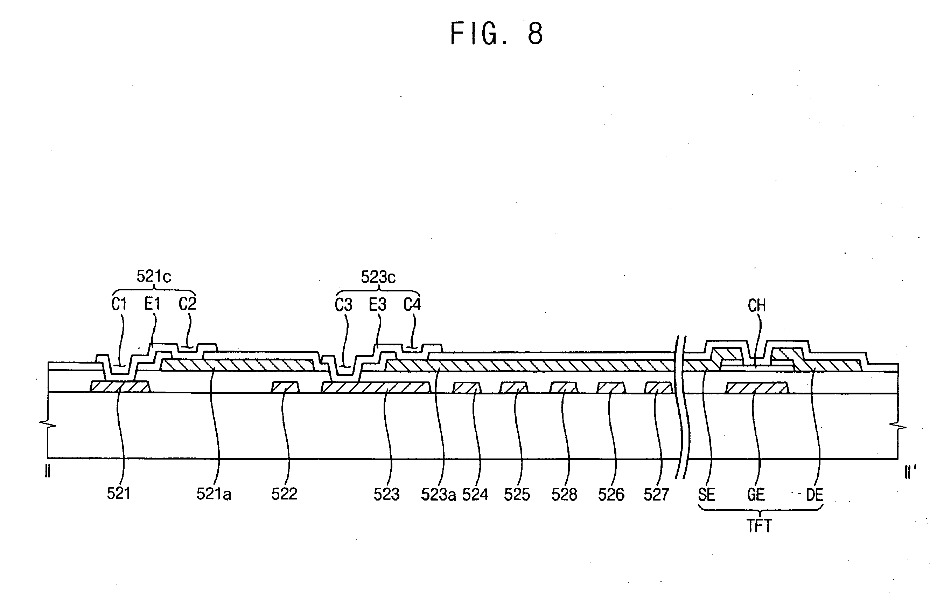

FIG. 7 shows a layout of the gate driving circuit shown in FIG. 6. FIG. 8 is a cross-sectional view taken along the line II-II' shown in FIG. 7.

Referring to FIG. 6 to FIG. 8, a gate driving circuit includes signal lines 520, a driving circuit part 530 having a plurality of stages (SRC4n-2, SRC4n-1) and connection lines (not shown) connecting the signal lines 520 with the driving circuit part 530.

Each stage (SRC4n-2) includes a plurality of thin film transistors (TFTs) connected to each other. The TFTs include the gate electrode (GE) comprising a first conductive layer, the source and the drain electrode (SE, DE) comprising a second conductive layer and the channel (CH) comprising, for example, an amorphous layer or polycrystalline layer.

The signal lines 520 include a first, a second, a third, a fourth, a fifth, a sixth, a seventh, and an eighth signal lines 521, 522, 523, 524, 525, 526, 527, 528. The signal lines 520 may comprise a first conductive layer.

The connection lines include a first, a second, a third, a fourth, a fifth, a sixth, and a seventh signal lines 521 a, 522a, 523a, 524a, 525a, 526a, 527a. The connection lines may comprise a second conductive layer insulated from the first conductive layer. Alternatively, when the signal lines 520 comprise the second conductive layer, the connection lines comprise the first conductive layer.

In an embodiment, the first connection line 521 a comprises an extending portion extending in parallel with respect to the first signal line 521 to receive the gate off voltage (VOFF) and a diverging portion diverging from the extending portion to electrically connect the power terminal (VG) of the (4n-2)^{th} stage (SRC4n-2). The first signal line 521 is electrically connected with the first connection line 521 a through the first contact part 521c. The first contact part 521 c includes a first contact hole (C1), a second contact hole (C2) and a first contact electrode (E1). The first contact hole (C1) exposes the third signal line 521, and the second contact hole (C2) exposes the first connection line 521a. The first contact electrode (E1) electrically connects the first signal line 521 and the first connection line 521 a through the first and second contact holes (C1, C2).

A first end portion of the third connection line 523a overlaps the third signal line 523, and a second end portion of the third connection line 523a is electrically connected with a first clock terminal (CK1) of the (4n-2)^{th} stage (SRC4n-2). The third signal line 523 is electrically connected with the third connection line 523a through a third contact part 523c.

The third contact part 523c includes a third contact hole (C3), a fourth contact hole (C4) and a second contact electrode (E2). The third contact hole (C3) exposes the third signal line 523, and the fourth contact hole (C4) exposes a first end portion of the third connection line 523a. The second contact electrode (E2) connects the third signal line 523 with the third connection line 523a through the third and fourth contact holes (C3, C4).

A first end portion of the fifth connection line 525a overlaps the fifth signal line 525. A second end portion of the fifth connection line 525a is electrically connected with a second clock terminal (CK2) of the (4n-2)^{th} stage (SRC4n-2). The fifth signal line 525 is electrically connected with the fifth connection line 525a through the fifth contact part 525c.

The fifth contact part 525c includes a fifth contact hole (C5), a sixth contact hole (C6) and a third contact electrode (E3). The fifth contact hole (C5) exposes the fifth signal line 525, and the sixth contact hole (C6) exposes the first end portion of the fifth connection line 525a. The third contact electrode (E3) connects the fifth signal line 525 with the fifth connection line 525a through the fifth and sixth contact holes (C5, C6).

A first end portion of the sixth connection line 526a overlaps the sixth signal line 526, and a second end portion of the sixth connection line 526a is electrically connected with the (4n-2)^{th} stage (SRC4n-2). The sixth signal line 526 is electrically connected with the sixth connection line 526a through a sixth contact part 526c.

The sixth contact part 526c includes a seventh contact hole (C7), an eighth contact hole (C8) and a fourth contact electrode (E4). The seventh contact hole (C7) exposes the sixth signal line 526, and the eighth contact hole (C8) exposes the first end portion of the sixth connection line 526a. The fourth contact electrode (E4) connects the sixth signal line 526 with the sixth connection line 526a through the seventh and eighth contact holes (C7, C8).

A first end portion of the seventh connection line 527a overlaps the seventh signal line 527, and a second end portion of the seventh connection line 527a is electrically connected with a (4n-2)^{th} stage (SRC4n-2). The seventh signal line 527 is electrically connected with the seventh connection line 527a through a seventh contact part 527c.

The seventh contact part 527c includes a ninth contact hole (C9), a tenth contact hole (C10) and a fifth contact electrode (E5). The ninth contact hole (C9) exposes the seventh signal line 527, and the tenth contact hole (C10) exposes the first end portion of the seventh connection line 527a. The fifth contact electrode (E5) connects the seventh signal line 527 with the seventh connection line 527a through the ninth and tenth contact holes (C9, C10).

The (4n-1)^{th} stage (SRC4n-1) is connected with the first, second, fourth, sixth and seventh connection lines 521 a, 522a, 524a, 526a, and 527a through the first, second, fourth, sixth and seventh connection lines 521 a, 522a, 524a, 526a and 527a. The first, second, fourth, sixth and seventh signal lines 521, 522, 523, 526 and 527 are connected with the first, second, fourth, sixth and seventh connection lines 521a, 522a, 524a, 526a and 527a through the first, second, fourth, sixth and seventh contact parts 521 c, 522c, 524c, 526 and 527c.

Since the second, third, fourth, fifth, sixth and seventh contact parts 522c, 523c, 524c, 525c, 526c and 527c overlap the second, third, fourth, fifth, sixth and seventh signal lines 522, 523, 524, 525, 526 and 527, respectively, an additional contact area between the signal lines is not needed. Therefore, a width of a gap between the signal lines can be minimized.

Moreover, as an area to form the signal lines 520 can be minimized, a total area to form the gate driving circuit can be minimized. A corrosion of the gate driving circuit can be prevented by forming the gate driving circuit within an area where the sealing member 50 is formed.

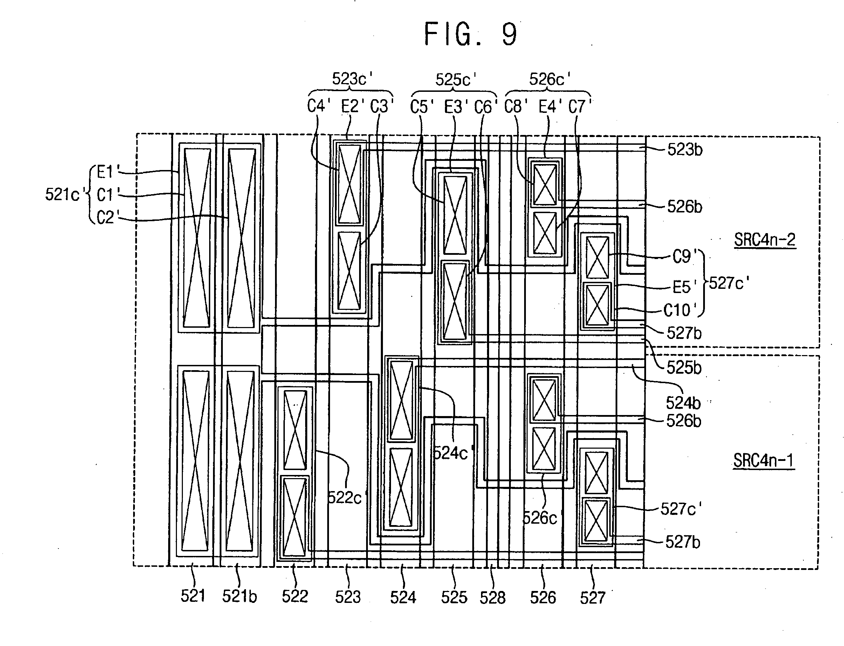

FIG. 9 is a layout for showing a gate driving circuit in accordance with an exemplary embodiment of the present invention.

Referring to FIG. 9, a (4n-2)^{th} stage (SRC4n-2) is electrically connected with a first, third, fifth, sixth and seventh signal lines 521, 523, 525, 526 and 527 through a first, third, fifth, sixth and seventh connection lines 521 b, 523b, 525b, 526b and 527b, respectively.

In an embodiment, the first connection line 521 b comprises an extending portion extending in parallel with respect to the first signal line 521 to receive the gate off voltage (VOFF) and a diverging portion diverging toward the (4n-2)^{th} stage (SRC4n-2) to electrically connect the power terminal (VG) of the (4n-2)^{th} stage (SRC4n-2).

The diverging portion of the first connection line 521 b may be bent in a zigzag shape to enlarge a contact area.

The first signal line 521 is electrically connected with the first connection line 521b through a first contact part 521c'. The first contact part 121c' includes a first contact hole (C1'), a second contact hole (C2') and a first contact electrode (E1'). The first contact hole (C1') exposes the first signal line 521, and the second contact hole (C2') exposes the first connection line 521 b. The first contact electrode (E1') connects the first signal line 521 with the first connection line 521 b through the first and second contact holes (C1', C2').

A first end portion of the third connection line 523b overlaps the third signal line 523, and a second end portion of the third connection line 523b is electrically connected with a first clock terminal (CK1) of the (4n-2)^{th} stage (SRC4n-2). For example, the first end portion of the second connection line 522b may have an overlapping area with the third signal line 523 broader than that of the first end portion of the third connection line 523a as shown in FIG. 7.

In an embodiment, since the first connection line 521 b is formed in a zigzag shape, the third contact part 523c' can have a contact area broader than that of the third contact part 523c as shown in FIG.7.

The third contact part 523c' includes a third contact hole (C3') to expose the third signal line 523 and a fourth contact hole (C4') to expose the first end portion of the third connection line 523b. The third contact part 523c' further includes a second contact electrode (E2') connecting the third signal line 523 with the third connection line 523b through the third and fourth contact holes (C3', C4').

A first end portion of the fifth connection line 525b overlaps the fifth signal line 525, and a second end portion of the fifth connection line 525b is electrically connected with the second clock terminal (CK2) of the (4n-2)^{th} stage (SRC4n-2). For example, the first end portion of the fifth connection line 525b may have an overlapping area with the fifth signal line 525 broader than that of the first end portion of the fifth connection line 525a as shown in FIG. 7.

In an embodiment, since the first connection line 521 b is formed in a zigzag shape, the fifth contact part 525c' can have a contact area broader than that of the fifth contact part 525c as shown FIG. 7. The fifth contact part 525c' includes a fifth contact hole (C5') to expose the fifth signal line 525 and a sixth contact hole (C6') to expose the first end portion of the fifth connection line 525b. The fifth contact part 525c' further includes a third contact electrode (E3') connecting the fifth signal line 525 with the fifth connection line 525b through the fifth and sixth contact holes (C5', C6').

A first end portion of the sixth connection line 526b overlaps the sixth signal line 526, and a second end portion of the sixth connection line 526b is electrically connected with the (4n-2)^{th} stage (SRC4n-2). For example, the first end portion of the sixth connection line 526b may have an overlapping area with the sixth signal line 526 broader than that of the first end portion of the sixth connection line 526a as shown in FIG. 7.

In an embodiment, since the first connection line 521 b is formed in a zigzag shape, the sixth contact part 526c' can have a contact area broader than that of the sixth contact part 526c as shown in FIG.7. The sixth contact part 526c' includes a seventh contact hole (C7') to expose the sixth signal line 526 and an eighth contact hole (C8') to expose the first end portion of the sixth connection line 526b. The sixth contact part 526c' further includes a fourth contact electrode (E4') connecting the sixth signal line 526 with the sixth connection line 526b through the seventh and eighth contact holes (C7', C8').

A first end portion of the seventh connection line 527b overlaps the seventh signal line 527, and a second end portion of the seventh connection line 527b is electrically connected with the (4n-2)^{th} stage (SRC4n-2). For example, the first end portion of the seventh connection line 527b may have an overlapping area with the seventh signal line 527 broader than that of the first end portion of the seventh connection line 527a as shown in FIG. 7.

In an embodiment, since the first connection line 521 b is formed in a zigzag shape, the seventh contact part 527c' can have a contact area broader than that of the seventh contact part 527c as shown in FIG.7. The seventh contact part 527c' includes a ninth contact hole (C9') to expose the seventh signal line 527 and a tenth contact hole (C10') to expose the first end portion of the seventh connection line 527b. The seventh contact part 527c' further includes a fifth contact electrode (E5') connecting the seventh signal line 527 with the seventh connection line 527b through the ninth and tenth contact holes (C9', C10').

The first, second, third, fourth and fifth contact electrodes (E1, E2, E3, E4 and E5) may comprise a third conductive layer. For example, the third conductive layer comprises the same material as that of a pixel electrode that is formed in pixel areas.

A (4n-1)^{th} stage (SRC4n-1) is electrically connected with the first, the second, the fourth, the sixth and the seventh signal lines 521, 522, 523, 526 and 527 through a first, a second, a fourth, a sixth and a seventh contact parts 521 c, 522c, 524, 526c and 527c, respectively.

As an area for forming the signal lines 520 can be minimized, a total area for forming the gate driving circuit can be minimized. Since the first connection line 521 b is formed in a zigzag shape, the first, the second, the third, the fourth, the fifth, the sixth and the seventh contact parts 521c', 522c', 523c' 524c', 525c', 526 and 527c' can have an enlarged contact area, respectively.

Although the illustrative embodiments of the present invention have been described herein with reference to the accompanying drawings, it is to be understood that the present invention should not be limited to those precise embodiments and that various other changes and modifications may be affected therein by one of ordinary skill in the related art without departing from the scope or spirit of the invention. All such changes and modifications are intended to be included within the scope of the invention as defined by the appended claims.

## Claims

1. A display substrate comprising:
a first substrate having a display area and a peripheral area surrounding the display area;
gate lines formed on the display area, the gate lines intersecting data lines;
a driving circuit part formed on the peripheral area, the driving circuit part providing a gate signal to gate lines;
signal lines formed adjacent to the driving circuit part, the signal lines providing driving signal to the driving circuit part;
connection lines having a first end portion overlapping the signal lines and a second end portion electrically connected with the driving circuit part; and
a contact part formed on the signal lines, the contact part electrically connecting the first end portion of the connection lines to the signal lines.

2. The display substrate of claim 1, wherein the driving circuit part comprises a shift register having a plurality of stages connected to one another in parallel.

3. The display substrate of claim 2, wherein each of the stages comprises a power terminal, a first clock terminal and a second clock terminal.

4. The display substrate of claim 1, wherein the signal lines comprise:
a first signal line transmitting a power voltage;
a second signal line transmitting a first clock signal; and
a third signal line transmitting a second clock signal having an inverted phase with respect to the first clock signal.

5. The display substrate of claim 1, wherein the connection lines comprise a first connection line connecting the first signal line to the power terminal.

6. The display substrate of claim 5, wherein the first connection line comprises an extending portion extending parallel to the first signal line and a diverging portion diverging from the extending portion to the stages.

7. The display substrate of claim 6, wherein the diverging portion is bent in a zigzag shape.

8. The display substrate of claim 6, wherein the connection lines further comprise a second connection line having a first end portion overlapping the second signal line and a second end portion connected with the first clock terminal and a third connection line having a first end portion overlapping the third signal line and a second end portion connected with the second clock terminal.

9. The display substrate of claim 8, wherein the contact part comprises a second contact part connecting the first end portion of the second connection line with the second signal line.

10. The display substrate of claim 9, wherein the contact part further comprises a third contact part connecting the first end portion of the third connection line with the third signal line.

11. The display substrate of claim 3, wherein the signal lines comprise:
a first signal line transmitting a power voltage;
a second signal line transmitting a first clock signal;
a third signal line transmitting a second clock signal;
a fourth signal line transmitting a third clock signal having an inverted phase with respect to the first clock signal; and
a fifth signal line transmitting a fifth clock signal having an inverted phase with respect to the second clock signal.

12. The display substrate of claim 11, wherein the connection lines comprise a first connection line connecting the first signal line with the power terminal of the stages.

13. The display substrate of claim 12, wherein the first connection line comprises an extending portion extending parallel to the first signal line and a diverging portion diverging from the extending portion to the stages.

14. The display substrate of claim 13, wherein the diverging portion is bent in a zigzag shape.

15. The display substrate of claim 12, wherein the connection lines further comprises:
a second connection line having a first end portion overlapping the second signal line and a second end portion connected with the first clock terminal of an n^{th} stage;
a third connection line having a first end portion overlapping the third signal line and a second end portion connected with the first clock terminal of an (n+1)^{th} stage;
a fourth connection line having a first end portion overlapping the fourth signal line and a second end portion connected with the second clock terminal of the n^{th} stage; and
a fifth connection line having a first end portion overlapping the fifth signal line and a second end portion connected with the second clock terminal of the (n+1)^{th} stage.

16. The display substrate of claim 15, wherein the contact part further comprises:
a second contact part connecting the first end portion of the second connection line with the second signal line;
a third contact part connecting the first end portion of the third connection line with the third signal line;
a fourth contact part connecting the first end portion of the fourth connection line with the fourth signal line; and
a fifth contact part connecting the first end portion of the fifth connection line with the fifth signal line.

17. The display substrate of claim 11, wherein the signal lines further comprise:
a sixth signal line providing a forward signal to drive the stages forwardly; and
a seventh signal line providing a reverse signal to drive the stages in reverse.

18. The display substrate of claim 17, wherein the connection lines further comprise:
a sixth connection line having a first end portion overlapping the sixth signal line and a second end portion connected with the stages; and
a seventh connection line having a first end portion overlapping the seventh signal line and a second end portion connected with the stages.

19. The display substrate of claim 18, wherein the contact part further comprises:
a sixth contact part connecting the first end portion of the sixth connection line with the sixth signal line; and
a seventh contact part connecting the first end portion of the seventh connection line with the seventh signal line.

20. A display device comprising:
a display substrate having a display area that includes gate lines and data lines intersecting the gate lines and a peripheral area including a gate driving part providing a gate signal to the gate lines;
a sealing member formed on the peripheral area to cover the gate driving part;
a counter substrate coupled with the display substrate using the sealing member; and
a liquid crystal layer interposed between the display substrate and the counter substrate,
wherein the gate driving part comprises signal lines transmitting a driving signal, a driving circuit part generating the gate signal by using the driving signal, connection lines having a first end portion overlapping the signal lines and a second end portion electrically connected with the driving circuit part, and a contact part electrically connecting the first end portion of the connection lines with the signal lines.

21. The display device of claim 20, wherein the driving circuit part comprises a shift register having a plurality of stages connected to one another in parallel.

22. The display device of claim 21, wherein each of the stages comprise a power terminal, a first clock terminal and a second clock terminal.

23. The display device of claim 22, wherein the signal lines comprise:
a first signal line transmitting a power voltage;
a second signal line transmitting a first clock signal; and
a third signal line transmitting a second clock signal having an inverted phase with respect to the first clock signal.

24. The display device of claim 23, wherein the connection lines comprise a first connection line connecting the first signal line with the power terminal.

25. The display device of claim 24, wherein the first connection line comprises an extending portion extending parallel to the first signal line and a diverging portion diverging from the extending portion to the stages.

26. The display device of claim 25, wherein the first connection line is bent in a zigzag shape.
